# EUROPEAN PATENT APPLICATION

(11) **EP 1 608 189 A1**
(43) Date of publication of application: **21.12.2005**
(21) Application number: 05253697.6
(22) Date of filing: 15.06.2005
(51) Int. Cl.: H04Q 7/22

(54) **Method and apparatus for reducing latency during handoffs in a communications system**

(30) Priority: 18.06.2004 US 872121
(71) Applicant: LUCENT TECHNOLOGIES INC., Murray Hill, New Jersey 07974-0636 (US)
(72) Inventor: Vedder, Dietrich, Cambria, Wisconsin 53923 (US); Mooney, Christopher F., Livingston, NJ 07039 (US)
(74) Representative: Sarup, David Alexander

(57) **Abstract**

A methodology is provided to reduce data session handoff time between 3G1x and EV-DO technologies for dual mode access terminals. Generally, a dual mode access terminal is communicating with a data network through a base station and a particular packet data service node (PDSN) using EV-DO technology. When the EV-DO technology becomes at least temporarily unavailable, a handoff process is initiated so that communications with the data network may continue using 3Glx technology. During handoff, the access terminal provides an access network identification (ANID) that contains an International Mobile Subscriber Identifier (IMSI). A radio network controller within the base station extracts the IMSI and uses it to select the same PDSN used with the EV-DO technology, which eliminates the need to access an authentication, authorization, and Accounting (AAA) server and perform a re-authentication process.

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

Phenomenal growth within the field of Information Technology and the Internet has created a need for a high-performance wireless Internet technology. Communications devices, such as personal digital assistants and smart phones, enable users to communicate wirelessly while on the move. One technology that offers high-speed, high-capacity wireless Internet connectivity is Phase 1 Evolution Data Only (1xEV-DO).

In some communities, 1xEV-DO is being phased in over time, with some areas currently supporting the new technology while others do not. That is, it is common for many areas to support an older technology, such as 3G1x, as well as the newer 1xEV-DO technology, while some areas only support the older technology. Accordingly, communication devices that are capable of taking advantage of the 1xEV-DO technology are commonly configured to also communicate using the older technology. Thus, when 1xEV-DO technology is available in an area, the communications device takes advantage of its presence and communicates using the new, high-speed technology. However, when only the older technology is available, the communications device is forced to use the older, relatively slow-speed technology.

The user of a communication device may travel through an area where the availability of 1xEV-DO technology varies substantially. Thus, the communications device may often switch between the older and newer technologies. Each time that such a switch (commonly referred to as a handoff) occurs, a significant period of time (commonly known as latency) is consumed by the handoff process. During this authentication, data signals are not exchanged and, accordingly, the performance of the system suffers.

The present invention is directed to overcoming, or at least reducing, the effects of, one or more of the problems set forth above.

### SUMMARY OF THE INVENTION

In one aspect of the present invention, a method for controlling handoff between a first and second technology. The method comprises receiving a signal containing an international mobile subscriber identifier, and selecting a packet data serving node based on the international mobile subscriber identifier.

In another aspect of the present invention, a method for controlling handoff between a first and second technology is provided. The method comprises selecting a packet data serving node during communication using the first technology; and selecting the same packet data serving node during handoff to the second technology.

### BRIEF DESCRIPTION OF THE DRAWINGS

The invention may be understood by reference to the following description taken in conjunction with the accompanying drawings, in which like reference numerals identify like elements, and in which:
Figure 1 stylistically depicts a communications system employing both 1xEV-DO and 3G1x technology;
Figure 2 is a more detailed block diagram of communications system of Figure 1, in accordance with one embodiment of the present invention; and
Figure 3 stylistically depicts a flow diagram of a process for controlling handoff between a 1xEV-DO based system and a 3G1x based system.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The methodology described herein is presented in the context of an EV-DO RAN authentication, but those skilled in the art will appreciate that the principals of the instant invention may be applied to any of a variety of communication technologies without departing from the spirit and scope of the instant invention. Generally, a methodology is described herein to reduce data session handoff time between 3G1x and EV-DO while eliminating the need to support the A12 interface. That is, the instant invention operates to effectively bypass the A12 interface

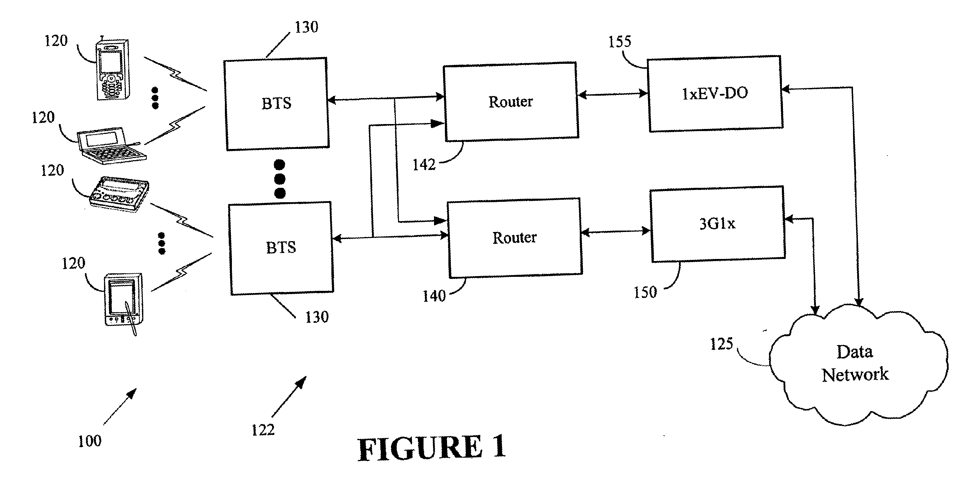

Turning now to the drawings, and specifically referring to Figure 1, a communications system 100 is stylistically illustrated, in accordance with one embodiment of the present invention. Generally, the system 100 is comprised of one or more access terminals 120 that are permitted to communicate with a data network 125, such as the Internet, through an access network 122. The access network is comprised of a plurality of components, including one or more base stations (BTS) 130 that include a radio network controller 131. In the illustrated embodiment, the BTSs 130 are coupled to a pair of routers 140, 142, which controllably delivers signals to either a 3G1x system 150 or a 1xEV-DO system 155, depending upon the technology utilized by the various access terminals 120. For example, if the access terminal 120 is an older model, utilizing 3G1x technology, then signals received from the access terminal 120 are routed through the 3G1x system 150. On the other hand, if the access terminal 120 utilizes 1xEV-DO technology, then signals received from the access terminal 120 are routed through the 1xEV-DO system 155. Both the 3G1x system 1501xEV-DO system 155 are coupled to the data network 125 so that information may be passed between the access terminals 120 and the data network 125 using the technology associated with each of the access terminals 120.

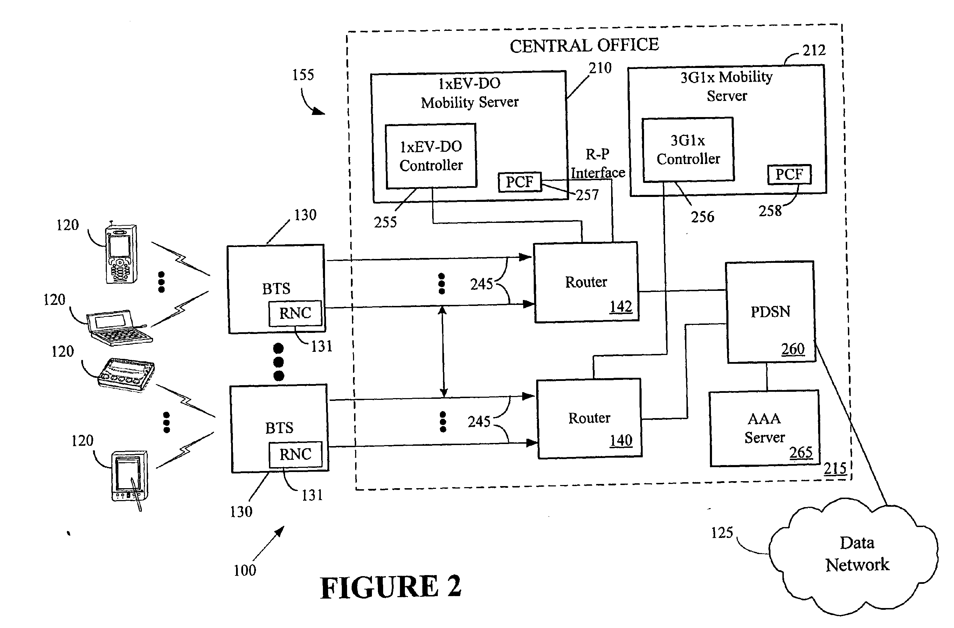

Turning now to Figure 2, a more detailed block diagram representation of an exemplary embodiment of the communication system 100 of Figure 1 is shown. The instant invention is presented herein in the context of a handoff between a 1xEV-DO and a 3G1x system, however, it will be understood by those skilled in the art that the present invention may be applicable to other systems that support data and/or voice communication without departing from the spirit and scope of the instant invention. The system 100 includes a 1xEV-DO mobility server 210 and a 3G1x Mobility server 212 located at a central office 215 that allow one or more of the access terminals 120 to communicate with the data network 125, such as the Internet, through one or more base stations (BTS) 130. The access terminal 120 may include one of a variety of devices, including cellular phones, personal digital assistants (PDAs), laptops, digital pagers, wireless cards, and any other device capable of accessing the data network 125 through the BTS 130.

In one embodiment, each BTS 130 may be coupled to the routers 140, 142 by one or more connections 245, such as T1/EI lines, Ethernet, or the like.

The mobility servers 210, 212 of Figure 2 generally provide connection establishment, mobility management, transport and system management services. The1xEV-DO mobility server 210, in the illustrated embodiment, includes a 1xEV-DO controller 255, and a packet control function (PCF) module 257. The 1xEV-DO controller 255 supports 1xEV-DO service in the communications system 100 of Figure 1. The PCF module 257, in one embodiment, buffers data received from a packet data service node (PDSN) 260 (described below), as well as maintains data during the dormant state. The PCF module 257 may support communications through an Open R-P (A10 - A11) interface, where the A10 interface may be utilized for packet traffic and the A11 interface for signaling. Because the Open R-P interface is well-known to those skilled in the art, it is not described in detail herein. Similarly, the 3G1x mobility server 212, in the illustrated embodiment, includes a 3G1x controller 256, and a packet control function (PCF) module 258. The 3G1x controller 256 supports 3G1x service in the communications system 100 of Figure 1. The PCF module 258, in one embodiment, buffers data received from the PDSN 260 (described below), as well as maintains data during the dormant state.

In the illustrated embodiment, the PDSN 260 is coupled between the routers 140, 142 and the data network 125. The PDSN 260 is also coupled to an authentication, authorization, and Accounting (AAA) server 265. The PDSN 260 generally establishes secure communications to the access terminal 120 through security information provided by the AAA server 265. In one embodiment, the PDSN 260 records data usage, receives accounting information from the PCF module 257 over the Open R-P (A10-A11) interface, correlates the data to generate the accounting information, and relays the correlated information to the AAA server 265. The PDSN 260 may also maintain a serving list and a unique link layer identifier for the access terminals 120.

The data network 125 may be a packet-switched data network, such as a data network according to the Internet Protocol (IP). One version of IP is described in Request for Comments (RFC) 791, entitled "Internet Protocol," dated September 1981. Other versions of IP, such as IPv6, or other connectionless, packet-switched standards may also be utilized in further embodiments. A version of IPv6 is described in RFC 2460, entitled "Internet Protocol, Version 6 (IPv6) Specification," dated December 1998. The data network 125 may also include other types of packet-based data networks in further embodiments. Examples of such other packet-based data networks include Asynchronous Transfer Mode (ATM), Frame Relay networks, and the like.

As utilized herein, a "data network" may refer to one or more communication networks, channels, links, or paths, and systems or devices (such as routers) used to route data over such networks, channels, links, or paths.

It should be understood that the configuration of the communications system 100 of Figure 1 is exemplary in nature, and that fewer or additional components may be employed in other embodiments without departing from the spirit and scope of the instant invention. For example, in one embodiment, the system 100 may include a network management system (not shown) that provides operation, administration, maintenance, and provisioning functions for a 1xEV-DO network. Additionally, the system 100 may include one or more multiplexers (not shown) connected between the BTS 130 and the router 140 for performing protocol translations. Similarly, other components may be added or removed from the communications system 100 of Figure 1 without deviating from the spirit and scope of the invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

Those skilled in the art will appreciate that when an access terminal 120 moves through a geographical region it may pass through some cells that support both 3G1x technology and 1xEV-DO technology, such as are illustrated in Figures 1 and 2. However, other adjacent geographic regions may exist in which 1xEV-DO technology has not been deployed or is otherwise unavailable. When an access terminal 120 transitions between these two types of regions, it may be desirable for the access terminal 120 to switch from one technology to the other. For example, when an access terminal moves from a region that supports 1xEV-DO technology to one that does not, it may be useful for the access terminal to switch from 1xEV-DO technology to 3G1x technology. The period of time during which this switching occurs is commonly referred to as handoff, and any delay that is experienced in the transmission of information because of the handoff is often called handoff latency. Handoff between the technologies may also occur within a cell that supports both technologies, but the 1xEV-DO technology becomes at least temporarily unavailable, for example, because of poor signal quality.

The handoff latency associated with switching between 3G1x and EV-DO in prior systems may be attributed largely to Point-to-Point Protocol (PPP) resynchronization and handoff between PDSNs. The instant invention avoids these delays by using the same set of PDSNs and the same International Mobile Subscriber Identifier (IMSI) in both technologies. In prior EV-DO systems, the real or true IMSI is not obtained from the access terminal 120. Rather, the access terminal typically provides an access network identification (ANID), and the AAA server 265 maintains a table that correlates the ANID with the real or true IMSI. Thus, in prior systems, the PDSN 260 must access the AAA server 265 to obtain the IMSI. The time spent accessing the AAA server 265 adds significant latency.

The PDSN 260 uses the real or true IMSI to determine whether there is an existing PPP session, and thus, whether PPP resynchronization is needed. Thus, during handoff between 3G1x and EV-DO, PPP resynchronization has inevitably been performed. As discussed in more detail below, in one embodiment of the instant invention, the real or true IMSI is obtained from the RNC 131 during a Radio Access Network (RAN) authentication process so that PPP resynchronization may be avoided. In an exemplary embodiment of the instant invention, the access terminal 120 is configured to produce a Network Access Identifier (NAI) that takes the form IMSI@realm (e.g., 9733866530@lucent.com). Thus, during RAN authentication the RNC 131 within the BTS 130 receives the NAI from the access terminal 120, extracts or parses the leading characters preceding the @ symbol, and uses these characters as the real or true IMSI. Those skilled in the art will appreciate that the purpose of the RAN authentication, in the context of this invention, is not to authenticate the access terminal 120, but rather, to obtain the real or true IMSI. Once the real or true IMSI is obtained, the EV-DO RNC can select the same PDSN used by the 3G1x RNC, thereby avoiding inter-PDSN handoff and the associated delays.

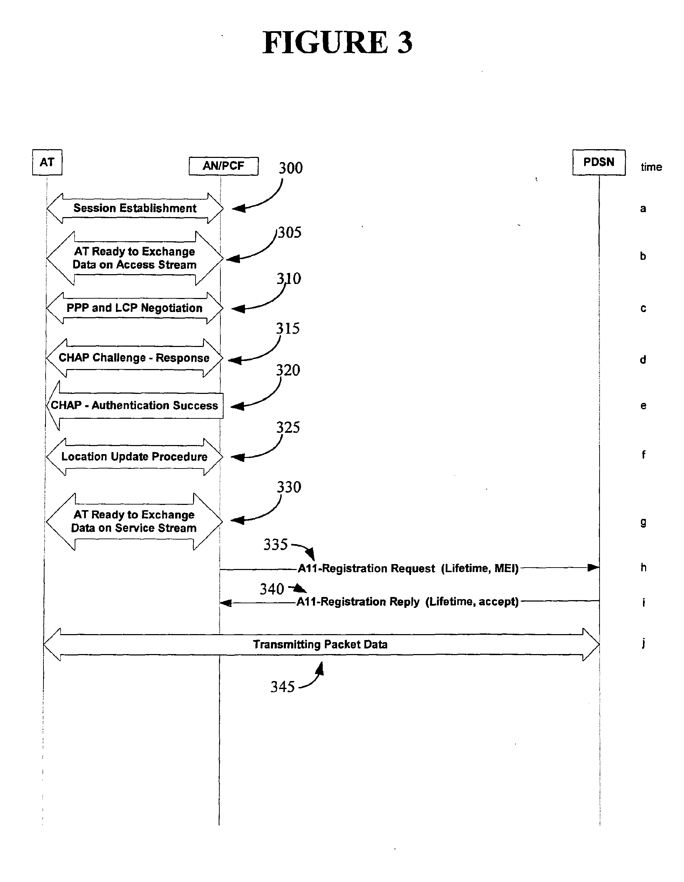

Referring now to Figure 3, a call flow describing an initial EV-DO session being established using a technique that effectively bypasses the A12 interface is shown. The process begins at 300 with the access terminal 120 and the access network 122 initiating an EV-DO session and establishing a connection in accordance with the EV-DO Rev 0 standard. During this procedure, the access network 122 receives a Random Access Terminal Identity (RATI) not a Unicast Access Terminal Identity (UATI). Since no session exists between the access terminal 120 and the access network 122, a session is established where protocols and protocol configurations are negotiated, stored and used for communications between the access terminal 120and the access network 122.

At 305, the access terminal 120 indicates that it is ready to exchange data with the access network 122. The access terminal 120 and the access network 122 initiate Point-to-Point Protocol (PPP) and Link Control Protocol (LCP) negotiations for access authentication at 310.

The access network 122 generates a random challenge and sends it to the access terminal 120 in a Challenge Handshake Authentication Protocol (CHAP) Challenge message at 315. The access terminal 120 provides a CHAP response. The access network 122 extracts the user portion of the NAI from the CHAP response and treats this as the Mobile Node Identification (MN ID). The access network 122 does not authenticate the CHAP challenge since the A12 interface has been disabled, but rather returns an indication of CHAP access authentication success to the access terminal 120 at 320.

At 325, the access network 122 invokes a conventional Location Update procedure by sending a Location Assignment to the access terminal 120 with the Access Network Identification (ANID) and then receives the Location Complete confirmation from the access terminal 120.

At 330, the access terminal 120 indicates that it is ready to exchange data on the service stream (e.g., the flow control protocol for the default packet application bound to the packet data network is in the open state). The Packet Control Function (PCF) recognizes that no A10 connection associated with the access terminal 120 is available and selects a PDSN 260 by dividing the last 4 digits of the MN ID by the number of PDSN's configured. The remainder is used as the index to select from a list of PDSNs 260. At 335, the PCF sends an A11-Registration Request message to the PDSN 260 and includes its Current Access Node Identification (CANID). The A11-Registration Request message is validated and the PDSN 260 accepts the connection by returning an A11-Registration Reply message with an accept indication and Lifetime set to the configured Tᵣₚ value at 340. The A10 connection binding information at the PDSN 260 is updated to point to the PCF and the CANID sent by the PCF and is stored along with the IMSI. The PCF stops timer T_{regreq}.

At this point, the R-P connection is established and packet data can flow between the access terminal 120 and the PDSN 260 after PPP negotiation is completed. The access terminal 120 periodically tunes away to perform 3G1x idle state procedures.

The above-described process sets forth exemplary procedures that may be followed during a handoff from a 3G1x technology to an EV-DO technology. In contradistinction thereto, the following process sets forth exemplary procedures that may be followed during a handoff From EV-DO technology to 3G1x technology.

This scenario assumes the access terminal 120 supports ISA-56 Rev A procedures to transmit PANID in an Origination message. The scenario requires the 3G1x RNC/PCF to support PANID/CANID in the A11 Registration Request. For the scenario where the access terminal 120 has an active EV-DO connection, the access terminal 120 may determine that the EV-DO signal strength is no longer sufficient and will tune back to the 3G1x technology. If instead the access terminal 120 is in an idle state on EV-DO, a dormant handoff to the 3G1x technology can occur if the access terminal 120 reaches the end of EV-DO coverage. The access terminal 120 sends an Origination message with the PANID that was obtained previously from EV-DO to move the data session to 3G1x.

The 3G1x RNC/PCF has the same list of PDSNs 260 as the EV-DO RNC and selects the same PDSN 260 since the IMSI hashing algorithm is identical. The 3G1x RNC/PCF relays the IMSI, Mobility Event Indicator (MEI), the received PANID and the PCF's CANID to the PDSN 260 in an A11 Registration Request. The PDSN 260 determines that no PPP resynchronization is necessary since a PPP session already exists for this IMSI and the received PANID matches the ANID stored in the PDSN 260 for this session. The PDSN 260 sends an A11 Registration Reply and stores the received CANID in its ANID field. The access terminal 120 can then begin to transmit data. The PDSN 260 also sends an A11 Registration Update to the EV-DO RNC/PCF which results in the removal of the R-P. The EV-DO session information is still retained in the RNC.

Turning now to a situation where a handoff occurs back to the EV-DO technology, the access terminal 120 does not monitor EV-DO while a 3G1x data connection is active. The access terminal 120 completes data transmission on 3G1x and after timer expiration returns to the dormant state. The access terminal 120 scans periodically for EV-DO and acquires an acceptable pilot. If the serving EV-DO RNC is the same as the RNC used in the prior EV-DO connection, the access terminal 120 sends an unsolicited Location Notification with the PANID obtained from 3G1x. RAN authentication is not required since the EV-DO session has not expired and the session information (including the IMSI) is stored in the RNC/PCF.

The EV-DO RNC/PCF relays the IMSI, MEI, the received PANID and the PCF's CANID to the PDSN 260 in the A11 Registration Request. The PDSN 260 determines no PPP resynchronization is necessary since a PPP session already exists for this IMSI and the received PANID matches the ANID stored in the PDSN 260. The PDSN 260 sends an A11 Registration Reply and stores the received CANID in its ANID field. The PDSN 260 sends an A11 Registration Update to the 3G1x PCF to clear the R-P connection.

The access terminal 120 performs idle state procedures in both the EV-DO and 3G1x systems 150, 155 and can establish an EV-DO connection when there is data to send.

It should be noted that if the access terminal 120 returns from 3G1x to an EV-DO RNC different than the previous EV-DO RNC there are incremental steps to assign a new UATI and transfer the session information between the EV-DO RNCs. RAN authentication is not performed again since the session information (along with the IMSI) is retrieved from the previous EV-DO RNC. The A11 procedures are the same as above. See IS-878-1 section 3.6.1 for the detailed call flow.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by a respective control unit 220 causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method for controlling handoff between a first and second technology, comprising:
receiving a signal containing an international mobile subscriber identifier;
parsing the international mobile subscriber identifier from the signal in a radio network controller; and
selecting a packet data serving node based on the parsed international mobile subscriber identifier.

2. A method, as set forth in claim 1, wherein receiving the signal containing the international mobile subscriber identifier further comprises receiving an access network identification.

3. A method, as set forth in claim 2, wherein receiving the access network identification further comprises receiving an access network identification with the international mobile subscriber identifier embedded therein.

4. A method, as set forth in claim 3, wherein parsing the international mobile subscriber identifier from the signal further comprises extracting the international mobile subscriber identifier from the access network identification.

5. A communications system, comprising:
a radio network controller adapted to receive a signal containing an international mobile subscriber identifier; and ,
a packet data serving node adapted to receive the international mobile subscriber identifier from the radio network controller.

6. A communications system, as set forth in claim 11, wherein the radio network controller is adapted to receive a signal containing an international mobile subscriber identifier in an access network identification.

7. A communications system, as set forth in claim 11, wherein the radio network is adapted to receive an access network identification with the international mobile subscriber identifier embedded therein.

8. A communications system, as set forth in claim 13, wherein the radio network controller is adapted to parse the international mobile subscriber identifier from the access network identification.
